# EUROPÄISCHE PATENTANMELDUNG

(11) **EP 0 531 909 A1**
(43) Veröffentlichungstag der Anmeldung: **17.03.1993**
(21) Anmeldenummer: 92115219.5
(22) Anmeldetag: 04.09.1992
(51) Int. Cl.: G03H 1/08, G02B 5/32

(54) **Mittels Fehlerdiffusionsverfahren binärisiertes Computerhologramm**

(30) Priorität: 13.09.1991 DE 4130516
(71) Anmelder: Fried. Krupp AG, D-45143 Essen (DE)
(72) Erfinder: Hauck, Richard, Dr. Dipl.-Phys., W-4405 Nottuln (DE); Schröder, Horst, Dipl.-Phys., W-5245 Mudersbach (DE); Würzburger, Martin, Dipl.-Phys. Ing., W-4300 Essen 1 (DE)

(57) **Zusammenfassung**

In einem computer-generierten Hologramm (13) (CGH) wird unter Binärisierung mit Hilfe des im Prinzip nach dem Stand der Technik bekannten Fehlerdiffusionsverfahrens im Fourier-Spektrum des CGH mindestens eine Nullstelle des Binärisierungsrauschens erzeugt, die im Spektrum der Nutzwelle liegt bzw. durch dieses verläuft. Durch Filterung (15) in der Fourier-Ebene des CGH kann das Nutzlicht vom Rauschen getrennt und eine rauschfreie Nutzwelle (11) erzeugt werden, insbesondere zur Erzeugung eines holographisch-optischen Elementes (12).

## Beschreibung

Die Erfindung betrifft ein mittels Fehlerdiffusionsverfahren binärisiertes Computerhologramm zur Erzeugung asphärischer Wellenfronten für interferometrische Anwendungen sowie ein Verfahren zur Erzeugung asphärischer Wellenfronten für interferometrische Anwendungen unter Verwendung eines computer-generierten Hologrammes (CGH).

Die Erzeugung von asphärischen Wellenfronten unter ausschließlicher Benutzung von konventionellen optischen Systemen erweist sich als äußerst schwierig, so daß hierzu im Regelfall auf computer-generierte Hologramme zurückgegriffen wird. Einen einführenden Überblick über diesen Stand der Technik liefert R.C. Fairchild, J.R. Fienup "Computer-originated hologram lenses", Proc. SPIE Vol. 215, "Recent Advances in Holography" (1980), Seiten 2 bis 14.

Die Computerholographie erlaubt es, durch Berechnung und Herstellung von Beugungsstrukturen Wellen gezielt zu modifizieren. Der mit der Erfindung angesprochene Anwendungsfall ist die Herstellung von asphärischen Wellenfronten, wie sie zur Aufnahme von holographisch-optischen Elementen erforderlich sind oder die Herstellung von Vergleichswellen zur Vermessung von komplexen optischen Systemen.

Hinsichtlich der Wellenqualität wären idealerweise Beugungsstrukturen in Form räumlich modulierter Kosinusgitter herzustellen, also Masken, deren Transmissions- oder Reflexionsvermögen räumlich kosinusförmig variiert, wobei die Variation der Periodenlänge die optische Funktion der Beugungsstruktur bestimmt. In der Praxis lassen sich jedoch kontinuierliche Transmissionsverläufe schlecht oder nur mit sehr hohem Aufwand realisieren, wohingegen sich binäre Strukturen, die nur zwei Transmissions- oder Reflexionswerte aufweisen, durch Lithographie und/oder Ätzverfahren einfach herstellen und replizieren lassen. Hierbei wird die Kosinusfunktion durch eine Rechteckfunktion ersetzt. Dies führt zu höheren Beugungsordnungen, also Lichtanteilen, die das computer-generierte Hologramm unter größeren Beugungswinkeln als das Nutzlicht verlassen (vgl. W.-H. Lee "Computer-Generated Hologramms: Techniques and Applications", Progress in Optics XVI, E. Wolf Ed., North Holland 1978).

Die verfügbaren Schreibsysteme für computer-generierte Hologramme bedingen eine weitere Einschränkung, nämlich eine räumliche Quantisierung, d.h. die gewünschten binären Strukturen können nur innerhalb des gerätespezifischen Rasters an diskreten Stellen realisiert werden. Diese Ortsquantisierung führt in Verbindung mit den höheren Beugungsordnungen zu Aliasing, d.h. zu Störungen, die im Nutzlicht in der Art eines Rauschens in untrennbarer Weise überlagert sind. Das Ausmaß dieser Störungen hängt vom Verhältnis des Geräterasters zu den geschriebenen Strukturgrößen ab. Insbesondere bei den häufig anzutreffenden Raster-Scan-Systemen entstehen große Rauschbeiträge, da die Strukturgrößen und das Geräteraster in der gleichen Größenordnung liegen.

Es ist daher Aufgabe der vorliegenden Erfindung, ein binäres Computerhologramm der eingangs genannten Art zu schaffen, das die praktische Realisierung eines Rasters mittels eines einfach aufgebauten Schreibsystems ohne großen apparativen Aufwand schnell und kostengünstig ermöglicht und mit dem asphärische Wellen erzeugbar sind, die weitgehend vom Rauschen befreit sind.

Ferner ist es Aufgabe der vorliegenden Erfindung, das eingangs genannte Verfahren im Hinblick auf eine einfache Handhabung weiterzuentwickeln.

Die auf das binäre Computerhologramm bezogene Aufgabe wird durch die Merkmale nach Anspruch 1 gelöst, Weiterentwicklungen sind in den Ansprüchen 2 und 3 beschrieben.

Der grundlegende Gedanke der Erfindung besteht darin, das eingangs beschriebene Rauschen vom Nutzlicht durch Verwendung eines Fehlerdiffusionsverfahrens zur Codierung des Computerhologramms zu trennen. Das Fehlerdiffusionsverfahren ist prinzipiell nach dem Stand der Technik bekannt und wurde ursprünglich zur Binärisierung von Grautonbildern entwickelt und später zur Codierung von Fourier-Hologrammen erweitert. Bei diesem Verfahren wird die zu binärisierende Funktion, welche punktweise auf einem Raster vorliegt, sequentiell bearbeitet. Punkt für Punkt wird gemäß eines vorgebbaren Schwellenwertes entschieden, welchen der beiden Transmissions-Reflexionswerte der aktuelle Punkt annehmen soll. Der resultierende lokale Codierfehler wird hierbei gewichtet und auf die benachbarten, noch nicht binärisierten Datenpunkte verteilt, bevor die modifizierten Punkte der Schwellenwertoperation unterworfen werden. Auf diese Weise wird der lokale Fehler auf die Nachbarschaft verteilt und korrigiert. Dieses Codierverfahren erzeugt im Fourier-Spektrum spezifische Rauschanteile, deren räumliche Verteilung von der Art der Fehlerverteilung abhängt. Wie in der Veröffentlichung von S. Weissbach und F. Wyrowski "Application of error diffusion in diffractive optics", Holographic Optics III; Principles and Applications, Proc. SPIE 1507 (1991), und auch der Zwischenliteraturstelle S. Weissbach "Error diffusion procedure: theory and applications in optical signal processing", Applied Optics / Vol. 31 No. 14 / 10 May 1992, Seiten 2518 bis 2534, beschrieben, existiert ein analytischer Zusammenhang zwischen den Fehlerverteilungskoeffizienten und den Nullstellen der Rauschverteilungen im Fourier-Spektrum.

Nach der vorliegenden Erfindung werden nun die Lage und Gestalt des Fourier-Spektrums der Nutzwelle berechnet bzw. abgeschätzt und durch geeignete Wahl der Trägerfrequenz und der Fehlerverteilungskoeffizienten so angeordnet, daß im Spektrum der Nutzwelle die Nullstelle bzw. Nullstellenumgebung der Rauschverteilung liegt. Vorzugsweise läuft die einzige Nullstelle zentral durch das Fourier-Spektrum des CGH sowie durch das Nutzlicht (erste Beugungsordnung), die nullte Beugungsordnung und das Zwillingsbild (minus erste Beugungsordnung). Nach einer alternativen Ausführungsform der Erfindung liegen zwei Nullstellen des Binärisierungsrauschens symmetrisch zur nullten Ordnung vor, wovon die erste durch das Nutzlicht (erste Beugungsordnung) und die zweite durch das Zwillingsbild (minus erste Beugungsordnung) verlaufen.

Das beschriebene Computerhologramm wird in dem im Anspruch 4 beschriebenen Verfahren zur Erzeugung asphärischer Wellenfronten für interferometrische Anwendungen verwendet. Hierbei wird das Computerhologramm mit Hilfe des im Prinzip nach dem Stand der Technik bekannten Fehlerdiffusionsverfahrens derart binärisiert, daß im Fourier-Spektrum des Computerhologrammes mindestens eine Nullstelle des Binärisierungsrauschens erzeugt wird, die im Spektrum der Nutzwelle liegt bzw. durch dieses verläuft, und daß durch Filterung in der Fourier-Ebene des Computerhologrammes das Nutzlicht vom Rauschen getrennt wird. Dies bedeutet, daß im optischen Rekonstruktionsaufbau eine räumliche Filteranordnung vorgesehen ist, beispielsweise durch Hintereinanderschaltung zweier optisch durchgeführter Fourier-Transformationen, wobei in der Fourier-Ebene ein räumlicher Filter, beispielsweise eine Lochblende, derart eingesetzt wird, daß das Spektrum des Nutzlichtes durchgelassen wird, die Rauschanteile jedoch ausgeblendet werden. Als Ergebnis der zweiten Fourier-Transformation entsteht somit die gewünschte vom Rauschen befreite asphärische Wellenfront.

Diese kann nach einer weiteren Ausgestaltung der Erfindung zur Erzeugung eines holographisch-optischen Elementes verwendet werden.

Ausführungsbeispiele der vorliegenden Erfindung sind in den Zeichnungen dargestellt. Es zeigen
- Fig. 1: den Aufbau zur interferometrischen Herstellung eines holographisch-optischen Elementes und
- Fig. 2 und 3: jeweils Ausschnitte aus dem Fourier-Spektrum eines computer-generierten Hologrammes.

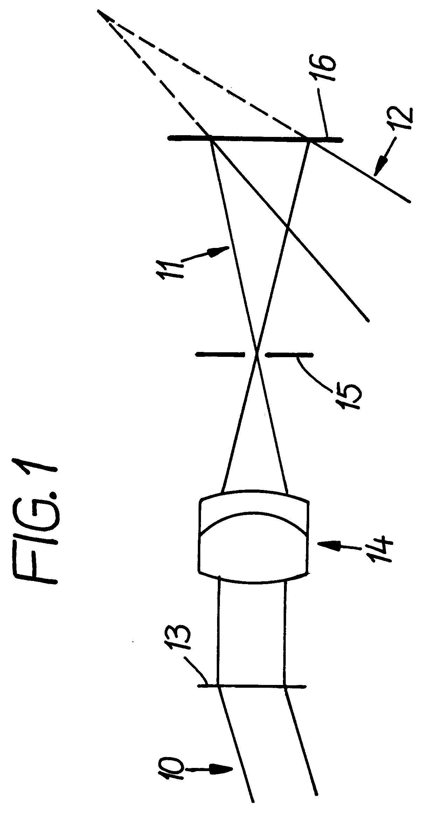

Der in Fig. 1 dargestellte Aufbau ist prinzipiell bekannt. Aus einer ebenen Lichtwelle 10 wird eine divergierende asphärische Referenzwelle 11 erzeugt, die mit einem konvergierenden Objektstrahl 12 überlagert wird. Die asphärische Referenzwelle 11 wird mittels eines computer-generierten Hologramms 13 und einer schematisch dargestellten Hilfsoptik 14 erzeugt. Die Blende 15 zum Abtrennen des Rauschens vom Nutzlicht befindet sich in der Brennebene der Hilfsoptik 14, so daß die vom Rauschen befreiten Nutzlichtanteile (Referenzwelle 11) zusammen mit der Objektwelle 12 ein holographisch-optisches Element 16 in Form eines Dichromatgelatinefilms belichten. Das computer-generierte Hologramm sowie das holographisch-optische Element werden im vorliegenden Fall in parallelen Ebenen zueinander angeordnet. Es sind jedoch auch andere Anordnungen möglich.

Das Fourier-Spektrum eines idealen Hologrammes besitzt typischerweise die drei Anteile:
1. Das Spektrum des Nutzlichtes,
2. den Gleichlichtanteil, welcher die Lage der optischen Achse definiert und
3. punktsymmetrisch das Zwillingsbild zum Nutzlichtspektrum.

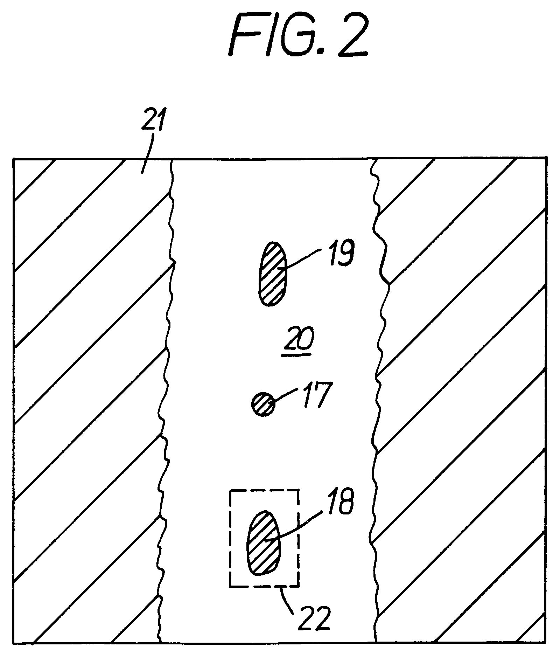

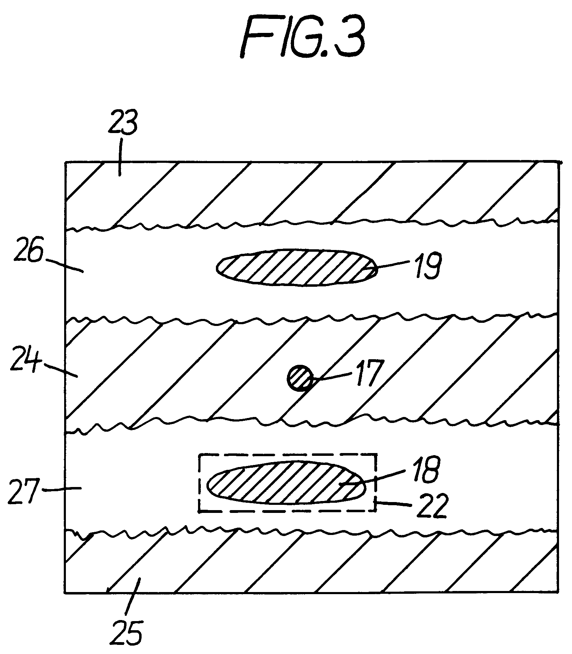

Das in Fig. 2 und 3 berechnete Fourier-Spektrum des zugehörigen binären Computerhologrammes enthält die charakteristischen Rauschwolken des Fehlerdiffusionsverfahrens. Die erste und minuserste Beugungsordnung 18 und 19 liegen jeweils symmetrisch zum Gleichlichtanteil der nullten Beugungsordnung, wobei im vorliegenden Fall mit Bezugszeichen 18 jeweils das Nutzlicht und mit Bezugszeichen 19 das hierzu entsprechende Zwillingsbild dargestellt sind. Durch Auswahl der Fehlerverteilungskoeffizienten ist das Nutzlichtspektrum so angeordnet, daß es in eine Nullstelle bzw. Nullstellenumgebung 20 (Fig. 2) bzw. 27 zu liegen kommt. Die schraffiert dargestellten Bereiche 21 sowie 23 bis 25 stellen die außerhalb der Nullstelle bzw. der Nullstellenumgebung liegenden Bereiche mit starkem Binärisierungsrauschen dar. Blendet man, wie durch das strichlinierte Rechteck 22 jeweils angedeutet, die Rauschanteile aus, so erhält man weitestgehend reines Nutzlicht 18.

Während in Fig. 2 die Nullstelle des Binärisierungsrauschens "vertikal" derart gelegt worden ist, daß die nullte und die erste Beugungsordnung sowie die höheren Ordnungen im Bereich der Nullstelle liegen, liegt, wie in Fig. 3 dargestellt, der Gleichlichtanteil 17 in einem Bereich starken Rauschens 24. Die Nullstellenbereiche 26 und 27 liegen hingegen symmetrisch zur nullten Beugungsordnung etwa im Bereich der Beugungen erster Ordnung 18 und 19.

## Patentansprüche

1. Mittels Fehlerdiffusionsverfahren binärisiertes Computerhologramm zur Erzeugung asphärischer Wellenfronten (11) für interferometrische Anwendungen,
**dadurch gekennzeichnet**,
daß im Fourier-Spektrum (15) des Computerhologrammes mindestens eine Nullstelle (20, 26, 27) des Binärisierungsrauschens (21; 23 bis 25) erzeugt worden ist, die im Spektrum der Nutzwelle (18) liegt bzw. durch dieses verläuft.

2. Binäres Computerhologramm nach Anspruch 1, dadurch gekennzeichnet, daß die Nullstelle (20) zentral durch das Fourier-Spektrum sowie das Nutzlicht (erster Ordnung) (18), die nullte Beugungsordnung (17) und das Zwillingsbild (minus erste Beugungsordnung) (19) verläuft.

3. Binäres Computerhologramm nach Anspruch 1, dadurch gekennzeichnet, daß zwei Nullstellen (26, 27) symmetrisch zur nullten Ordnung (17) vorliegen, wovon die erste (27) durch das Nutzlicht (erste Beugungsordnung) (18) und die zweite (26) durch das Zwillingsbild (minus erste Beugungsordnung) (19) verläuft.

4. Verfahren zur Erzeugung asphärischer Wellenfronten für interferometrische Anwendungen unter Verwendung computer-generierter Hologramme (CGH), die mittels Fehlerdiffusionsverfahren binärisiert werden, dadurch gekennzeichnet, daß im Fourier-Spektrum des CGH mindestens eine Nullstelle (20; 26, 27) des Binärisierungsrauschens (21; 23 bis 25) erzeugt wird, die im Spektrum der Nutzwelle (18) liegt bzw. durch dieses verläuft, und daß durch Filterung (15) in der Fourier-Ebene des CGH das Nutzlicht (18) vom Rauschen (21; 23 bis 25) getrennt wird.

5. Verfahren nach Anspruch 4, dadurch gekennzeichnet, daß das gefilterte Nutzlicht zur Erzeugung eines holographisch-optischen Elementes genutzt wird.
